# EUROPEAN PATENT SPECIFICATION

(11) **EP 0 796 197 B1**
(45) Date of publication and mention of the grant of the patent: **29.03.2000**
(21) Application number: 95941950.8
(22) Date of filing: 01.12.1995
(51) Int. Cl.: B64D 25/08, B64C 1/32

(54) **CANOPY BURSTING SYSTEM**
VORRICHTUNG ZUM DURCHBRECHEN EINES KANZELDACHES EINES FLUGZEUGES
SYSTEME POUR FAIRE SAUTER DES VERRIERES D'AVION

(30) Priority: 21.12.1994 SE 9404441
(43) Date of publication of application: 24.09.1997
(73) Proprietor: SAAB AKTIEBOLAG, 581 88 Linköping (SE)
(72) Inventor: OLSSON, Georg, S-582 33 Linköping (SE); HULTIN Mats, 58 721 Linköping (SE); AKERMAN Virgel, 582 21 Linköping (SE)
(74) Representative: Lundquist, Arne
(86) International application number: SE9501447
(87) International publication number: WO9619381

(56) References cited:
- US-A- 3 281 097
- US-A- 3 880 387

## Description

The present invention relates to a hood detonation system for blasting two hoods of a two-seated aircraft comprising a first detonation cord, detonable by means of initiation and attached to the first, front hood and a second detonation cord, detonable by means of initiation and attached to the second rear hood.

Hood detonation systems for one-seated military aircraft are previously known and have in recent years been developed at the same time as equipment for ejection of the pilot sitting in the seat by means of a powder charge. In order to provide a free way for this ejection the hood of the aircraft must be blasted. Thus, in one-seated aircraft a detonation cord has been used, which is initiated to detonate at the same time as a number of charges for, amongst other things, adjustment of the position of the pilot in the seat and the powder charge itself is initiated for the ejection. In two-seated aircraft where the second pilot is sitting behind the first, beneath a second rear hood, problems occur in blasting the rear hood due to the pressure distribution in the axial direction of the hood. Hence, during the detonation, splinters from the hood can move into the space inside the second hood and injure the pilot during the ejection.

The object of the present invention is to obtain a combination of two hoods of a two-seated aircraft and a hood detonation system of the kind mentioned in the introduction, which provides full security against injuries from splinters from the rear hood during ejection of the second, rear pilot.

Such a combination of two hoods of a two-seated aircraft and a hood detonation system is according to the invention characterized by a protective balloon inflatable by initiation of a gas generator essentially at the same time as the initiation of the detonation of the second detonation cord, the balloon being arranged to prevent blasted parts from the second hood to move into the space inside the second hood.

In a preferred embodiment of the invention, the gas generator together with the inflatable protective balloon is placed below the front part of the second hood, beneath an oblique pane arranged therein, which during inflation of the protective balloon imposes thereon a motion component directed backwards, into the second hood.

Another advantageous embodiment of the invention involves that the protective balloon is designed so that it during inflation at least partly fills the space that is located backwards, below the second hood.

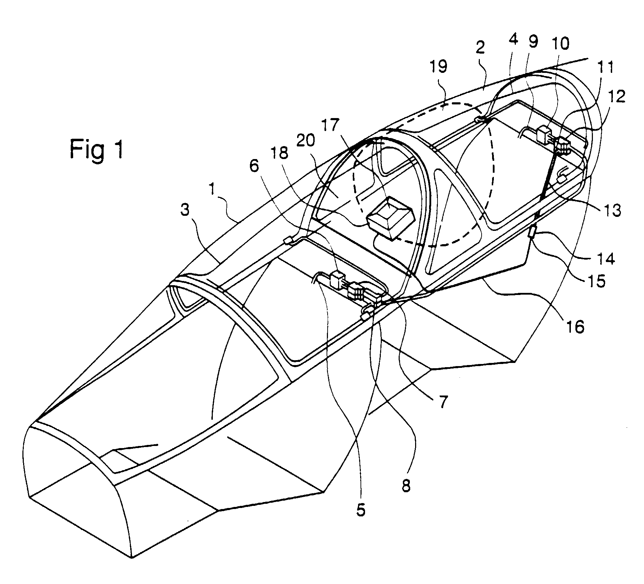

The invention is described in the following with reference to the accompanying schematic Figure, which shows an embodiment of the combination of two hoods of a two-seated aircraft and a hood detonation system according to the invention with a part of a two-seated military aircraft. Only parts of the aircraft that have relevance in the context are shown in the Figure.

In the Figure a front hood is denoted 1 and a second hood 2. Both are manufactured from acrylate resin. The front hood is equipped with a first detonation cord 3 extending along the lower edges of the hood and along its topmost part, and the rear hood is in a corresponding manner equipped with a second detonation cord 4. The first detonation cord 3 is initiated to detonate in connection with initiation of a powder charge for ejecting the first pilot, through a gas conduit 5 extending to a gas triggered igniter 6 that operates a transmission device 7 activating a charge 8 that initiates a detonation of the first detonation cord 3.

The rear detonation cord 4 is initiated to detonate in a corresponding manner through a gas conduit 9, a gas triggered igniter 10, a transmission device 11, a charge 12, which initiates detonation of the second detonation cord 4 as well as it initiates an igniter line 13 connected to a pressure switch 14 energizing an electric switch 15. An electric impulse is thereby transmitted through an electrical line 16 to an electrical igniter 18 located in a protective balloon container 17 that ignites a gas generator containing sodium azide. Thereby a protective balloon 19 is instantaneously inflated and fills the space below the rear hood, so that blasted parts thereof, i.e. splinters, are prevented from penetrating into the space below the second hood and injuring the second pilot.

In the hood detonation system shown, the protective balloon container 17 is located under the front part of the second hood 2, beneath an oblique pane 20 arranged therein, which during inflation of the protective balloon 19 imposes thereon a motion component directed backwards, below the second hood 2. The protective balloon 19 is moreover designed so that it during inflation partly fills the space located backwards, below the second hood 2.

## Claims

1. The combination of two hoods of a two-seated aircraft and a hood detonation system comprising a detonation cord (3), detonable by means of initiation and attached to the first, front hood (1), and a second detonation cord (4), detonable by means of initiation and attached to the second, rear hood (2),
characterized by
a protective balloon (19) inflatable by initiation of a gas generator essentially simultaneously with the initiation of the detonation of the second detonation cord (4), and adapted to prevent splintered parts from the second hood (2) to move into the space inside the second hood.

2. The combination according to claim 1,
characterized in
that the gas generator together with the inflatable protective balloon (19) is located below the front part of the second hood (2), beneath an oblique pane (20) arranged therein, which during inflation of the protective balloon imposes thereon a motion component backwards, below the second hood.

3. The combination according to claim 1 or 2,
characterized in
that the protective balloon (19) is so designed, that it during inflation at least partly fills the space located backwards, below the second hood (2).

## Patentansprüche

1. Kombination zweier Hauben eines zweisitzigen Flugzeuges und eines Haubendetoniersystemes mit einer mit Hilfe einer Zündung detonierbaren und an die erste, vordere Haube (1) befestigten Detonierleine (3) und einer zweiten mit Hilfe einer Zündung detonierbaren und an die zweite, hintere Haube (2) befestigten Detonierleine (4), **dadurch gekennzeichnet,** daß ein Schutzballon (19) durch Zünden eines Gasgenerators im wesentlichen gleichzeitig mit dem Detonieren der zweiten Detonierleine (4) aufblasbar ist und vorgesehen ist, Splitterteile der zweiten Haube (2) daran zu hindern in den Raum in der zweiten Haube einzudringen.

2. Kombination gemäß Patentanspruch 1, **dadurch gekennzeichnet,** daß der Gasgenerator zusammen mit dem aufblasbaren Schutzballon (19) unter dem Vorderteil der zweiten Haube (2) unter einer darin angeordneten geneigten Platte (20) verlegt ist, die während des Aufblasens des Schutzballons eine rückwärts unter die zweite Haube gerichtete Bewegungskomponente ausübt.

3. Kombination gemäß Patentanspruch 1 oder 2, **dadurch gekennzeichnet,** daß der Schutzballon (19) so gestaltet ist, daß er während des Aufblasens mindestens teilweise den hinten unter der zweiten Haube (2) liegenden Raum ausfüllt.

## Revendications

1. Combinaison de deux verrières d'un aéronef biplace et d'un système d'explosion de verrières comprenant un cordeau explosif (3), pouvant être amené à exploser au moyen d'un amorçage et fixé à la première verrière avant (1), ainsi qu'un second cordeau explosif (4), pouvant être amené à exploser au moyen d'un amorçage et fixé à la seconde verrière arrière (2),
caractérisée par
un ballon de protection (19) pouvant être gonflé par amorçage d'un générateur de gaz de façon pratiquement simultanée à l'amorçage de l'explosion du second cordeau explosif (4), et conçu pour empêcher des parties éclatées provenant de la seconde verrière (2) de pénétrer dans l'espace à l'intérieur de la seconde verrière.

2. Combinaison selon la revendication 1,
caractérisée en ce que
le générateur de gaz ainsi que le ballon de protection gonflable (19) sont situés sous la partie avant de la seconde verrière (2), au-dessous d'un pan oblique (20) agencé dans celle-ci, lequel, pendant le gonflage du ballon de protection applique à celui-ci une composante de mouvement vers l'arrière, sous la seconde verrière.

3. Combinaison selon la revendication 1 ou 2,
caractérisée en ce que
le ballon de protection (19) est ainsi conçu, que pendant son gonflage, il remplit au moins en partie l'espace située vers l'arrière, sous la seconde verrière (2).
